# EUROPÄISCHE PATENTANMELDUNG

(11) **EP 2 535 808 A1**
(43) Veröffentlichungstag der Anmeldung: **19.12.2012**
(21) Anmeldenummer: 11188844.2
(22) Anmeldetag: 11.11.2011
(51) Int. Cl.: G06F 9/445, G06F 9/30

(54) **Verfahren zum Transfer einer prozessorspezifischen Firmware in einen Arbeitsspeicher eines Automatisierungsgerätes**

(71) Anmelder: Siemens Aktiengesellschaft, 80333 München (DE)
(72) Erfinder: Extra, Johannes, 91052 Erlangen (DE); Ramm, Martin, 91091 Grossenseebach (DE)

(57) **Zusammenfassung**

Die Erfindung betrifft ein Verfahren zum Betrieb eines Automatisierungsgeräts (10) mit einem Arbeitsspeicher (12), einem Firmwarespeicher (14) und einen Prozessor (16), wobei in den Arbeitsspeicher (12) ein Urladeprogramm (20) geladen wird, wobei beim Start des Automatisierungsgeräts (10) durch den Prozessor (16) das Urladeprogramm (20) ausgeführt wird, bei dem das Urladeprogramm (20) Programmcodeanweisungen zur Identifikation verschiedener Prozessoren (16) umfasst und die Ausführung des Urladeprogramms (20) entsprechend dem jeweils identifizierten Prozessor (16) den Aufruf einer Firmwaretransferfunktionalität (28) bewirkt, so dass die Firmwaretransferfunktionalität (28) aus dem Firmwarespeicher (14) eine zum identifizierten Prozessor (16) passende Firmware (30, 32,34) in den Arbeitsspeicher (12) transferiert.

## Beschreibung

Verfahren zum Transfer einer prozessorspezifischen Firmware in einen Arbeitsspeicher eines Automatisierungsgerätes

Die Erfindung betrifft ein Verfahren zum Betrieb eines Automatisierungsgerätes zum Transfer einer prozessorspezifischen Firmware in einen Arbeitsspeicher des Automatisierungsgerätes.

Der Begriff "Automatisierungsgerät" umfasst sämtliche Geräte, Einrichtungen oder Systeme, also neben z.B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Automatisierungsgeräte der oben genannten Art sind an sich bekannt. Eine Funktionalität oder zumindest eine Basisfunktionalität solcher Geräte zur Automatisierung, Bewegungsführung, etc. ist als Firmware zusammengefasst. Diese ist auf einem Speichermedium im Gerät hinterlegt. Die Firmware wird bei einem Einschalten oder einem Neustart des Geräts zum Beispiel durch ein Urladeprogramm, das in der Fachterminologie auch als Bootlader/bootloader bezeichnet wird, in den Arbeitsspeicher des im Gerät arbeitenden Prozessors geladen.

Allerdings ist mitunter ungünstig, dass das Urladeprogramm dabei jeweils in einem spezifischen, zu dem im Gerät jeweils verbauten Prozessor passenden Maschinencode, ausgeführt sein muss. Ein Hersteller von Automatisierungsgeräten mit einer Vielzahl von Geräten und einer Vielzahl von für die einzelnen Geräte in Frage kommenden Prozessoren muss folglich für jeden Prozessortyp ein eigenes Urladeprogramm erstellen, warten und pflegen, sowie archivieren.

Eine Aufgabe der Erfindung besteht entsprechend darin, ein Verfahren zum Transfer einer prozessorspezifischen Firmware in einen Arbeitsspeicher eines Automatisierungsgerätes anzugeben, das die oben skizzierten Nachteile vermeidet.

Diese Aufgabe wird erfindungsgemäß mit den Merkmalen des Anspruchs 1 gelöst. Dazu ist bei einem Verfahren zum Betrieb eines Automatisierungsgeräts der eingangs genannten Art, mit einem Arbeitsspeicher, einem Firmwarespeicher und einen Prozessor, wobei in den Arbeitsspeicher ein Urladeprogramm geladen wird und wobei beim Start des Automatisierungsgeräts das Urladeprogramm durch den Prozessor ausgeführt wird, folgendes vorgesehen: Das Urladeprogramm umfasst Programmcodeanweisungen zur Identifikation verschiedener Prozessoren. Die Ausführung des Urladeprogramms entsprechend dem jeweils identifizierten Prozessor bewirkt den Aufruf einer Firmwaretransferfunktionalität bewirkt. Die Firmwaretransferfunktionalität transferiert aus dem Firmwarespeicher eine zum identifizierten Prozessor passende Firmware in den Arbeitsspeicher des Prozessors. Der Prozessor kann dann die in seinen Arbeitsspeicher geladene Firmware ausführen.

Der Vorteil der Erfindung besteht darin, dass für unterschiedliche Prozessortypen nur ein Urladeprogramm benötigt wird. Außerdem wird für die Auslieferung von Firmware jeweils nur noch ein Speichermedium benötigt, das die Firmware für unterschiedliche Prozessortypen umfasst. Aus diesem Grunde kann es kaum noch vorkommen, dass ein Automatisierungsgerät nicht in Betrieb genommen werden kann, weil die benötigte Firmware nicht verfügbar ist. Verwechselungen bei der Auslieferung von Firmware können nämlich nicht mehr vorkommen, wenn nur noch ein Speichermedium mit einer Vielzahl von Firmware vorgesehen ist. Dieser Vorteil bezieht sich nicht nur auf den Auslieferungsfall an einen Kunden sondern gilt in gleicher Weise für Servicepersonal, das bei einer Anreise zu einer Betriebsstätte mit einem oder mehreren Automatisierungsgeräten nur noch ein Exemplar eines Speichermediums mit einer Vielzahl von Firmware benötigt, so dass nicht zu befürchten ist, dass am Zielort evtl. festgestellt werden muss, dass die benötigte Firmware nicht verfügbar ist. Selbst wenn bei einem Anbieter mit einer besonders großen Vielzahl von Automatisierungsgeräten nicht sämtliche Firmware auf einem Speichermedium zusammengefasst werden kann, ergeben sich dennoch die oben skizzierten Vorteile zumindest im Wesentlichen, wenn zum Beispiel alle Firmware für Automatisierungsgeräte eines ersten Typs oder einer ersten Leistungsklasse und alle Firmware eines zweiten Typs oder zweiten ersten Leistungsklasse usw. zusammengefasst auf einem Speichermedium verfügbar sind.

Ein Urladeprogramm mit den oben skizzierten und nachfolgend mit weiteren Details beschriebenen Merkmalen fungiert auf einer obersten, gedanklichen Abstraktionsstufe als Auswahlprogramm für eine Firmwaretransferfunktionalität. Wenn also bei bisher im Stand der Technik bekannten Automatisierungsgeräten deren Urladeprogramm den (unbedingten) Transfer genau einer im dem Urladeprogramm eindeutig spezifizierten Firmware in den Arbeitsspeicher des Prozessors bewirkt hat, wird hier vorgeschlagen, dass das Urladeprogramm direkt oder indirekt eine Mehrzahl von Urladeprogrammen darstellt. Die Funktionalität bisheriger Urladeprogramme ist, soweit der Transfer einer Firmware in den Arbeitsspeicher des jeweiligen Prozessors betroffen ist, als Firmwaretransferfunktionalität implementiert.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass die Firmwaretransferfunktionalität nach dem Transfer der ausgewählten Firmware in den Arbeitsspeicher unmittelbar die Ausführung der Firmware durch den Prozessor veranlasst. Das Automatisierungsgerät kann also unmittelbar nach dem Transfer der jeweiligen Firmware in Betrieb gehen und durch Ausführung der Firmware stets die Funktionalität des Automatisierungsgeräts oder zumindest eine Basisfunktionalität zur Verfügung.

Bei einer weiteren Ausführungsform des Verfahrens ist vorgesehen, dass das Urladeprogramm für unterschiedliche Prozessortypen jeweils einzelne Abschnitte umfasst, dass jeder Abschnitt des Urladeprogramms durch einen Prozessor genau eines Prozessortyps ausführbar ist und dass jeder Abschnitt eine zum jeweiligen Prozessortyp passenden Firmwaretransferfunktionalität oder zumindest eine Programmcodeanweisung zum Aufruf jeweils einer zum jeweiligen Prozessortyp passenden Firmwaretransferfunktionalität umfasst. Bei einem in unterschiedliche Abschnitt unterteilten Urladeprogramm ist dieses für Ergänzungs- und Wartungszwecke übersichtlich gestaltet. Jede zu jeweils genau einem Prozessortyp passende Firmwaretransferfunktionalität kann entweder von dem jeweiligen Abschnitt des Urladeprogramms umfasst sein. Dann wird die Firmwaretransferfunktionalität direkt in dem Urladeprogramm aufgerufen. Das Urladeprogramm kann aber auch eine Programmcodeanweisung zum Aufruf einer jeweiligen Firmwaretransferfunktionalität umfassen. Dann kann die Firmwaretransferfunktionalität an einer anderen Stelle des Urladeprogramms oder außerhalb des Urladeprogramms gespeichert sein. In beiden Fällen erfolg bei Ausführung der oder jeder Programmcodeanweisung eines für einen jeweiligen Prozessor vorgesehenen Abschnitts des Urladeprogramms die spätere Ausführung der Firmwaretransferfunktionalität, mit der die zum Prozessor passende Firmware in den Arbeitsspeicher des Prozessors geladen wird.

Wenn jeder Abschnitt des Urladeprogramms als Programmcodeanweisung zum Aufruf einer jeweiligen Firmwaretransferfunktionalität einen Sprungbefehl umfasst, der eine passende Firmware im Firmwarespeicher direkt oder indirekt adressiert, kann die Firmwaretransferfunktionalität aus dem Urladeprogramm ausgelagert sein. Der Umfang des Urladeprogramms wird damit drastisch reduziert und auf diese Weise gewonnener Speicherplatz steht zur Verfügung um weitere Prozessortypen in dem Urladeprogramm zu berücksichtigen. Nachdem Sprungbefehle in unterschiedlicher Form realisierbar sind, soll sich der Begriff "Sprungbefehl" wie hier und im Folgenden verwendet auf jede Art von Programmcodeanweisung beziehen, die eine Fortsetzung der Programmausführung an einer durch ein Argument der Programmcodeanweisung direkt oder indirekt angegebenen Position bewirkt und damit zum Beispiel auch Aufrufe von Unterprogrammen oder dergleichen umfassen. Die Auslagerung der Firmwaretransferfunktionalität aus dem Urladeprogramm hat zudem noch den Vorteil, dass bei einer Änderung eines Umfangs einer Firmware die Start- und die Endadresse für einen Kopiervorgang, mit dem die Firmware in den Arbeitsspeicher des Prozessors transferiert wird, nicht im Urladeprogramm hinterlegt ist sondern leicht im Firmwarespeicher angepasst werden kann.

Bei einer weiteren Ausführungsform des Verfahrens ist vorgesehen, dass jeder Sprungbefehl in jeweils einem Abschnitt des Urladeprogramms jeweils einen Eintragung in einer im Firmwarespeicher vorgehaltenen Sprungtabelle adressiert und dass jeder Eintrag in der Sprungtabelle jeweils eine Firmware im Firmwarespeicher direkt adressiert. Die vom Urladeprogramm umfassten Sprungbefehle adressieren damit die jeweilige Firmware nur noch indirekt. Dies hat den Vorteil, dass bei Firmwareänderungen, die sich auf dessen oder deren Umfang und damit die Speicherposition im Firmwarespeicher auswirken, keine Änderungen am Urladeprogramm und den dort als Argument der Sprungbefehle verwendeten Adressen notwendig sind. Die Änderungen können sich allein auf die Sprungtabelle beschränken. Die oben genannte Aufgabe wird auch mit einem Automatisierungsgerät der eingangs genannten Art gelöst, das nach dem Verfahren wie hier und im Folgenden beschrieben arbeitet und dazu Mittel zur Durchführung des Verfahrens umfasst. Die Erfindung ist dabei in Software implementiert. Die Erfindung ist damit einerseits auch ein Computerprogramm mit durch einen Prozessor ausführbaren Programmcodeanweisungen und andererseits ein Speichermedium mit einem derartigen Computerprogramm sowie schließlich auch ein Automatisierungsgerät, in dessen Speicher als Mittel zur Durchführung des Verfahrens und seiner Ausgestaltungen ein solches Computerprogramm geladen oder ladbar ist. Das Computerprogramm, nämlich das Urladeprogramm, wird beim Einschalten des Automatisierungsgeräts durch dessen Prozessor ausgeführt wird. Unabhängig davon wird das Urladeprogramm auch bei jedem Neustart (reset) des Prozessors ausgeführt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: schematisch vereinfacht ein Automatisierungsgerät mit einem Arbeitsspeicher sowie einem Firmwarespeicher und dort vorgehaltener Firmware,
- FIG 2: ein im Arbeitsspeicher vorgehaltenes Urladeprogramm zur Auswahl einer Firmware aus dem Firmwarespeicher,
- FIG 3: ausgehend von der Darstellung in FIG 2 die Situation, dass die Firmwaretransferfunktionalität von der jeweiligen Firmware in dem im Firmwarespeicher vorgehaltenen Zustand umfasst ist und
- FIG 4: eine Sprungtabelle im Firmwarespeicher zur Erhöhung der Flexibilität bei der Adressierung einer Firmware im Firmwarespeicher aus dem Urladeprogramm.

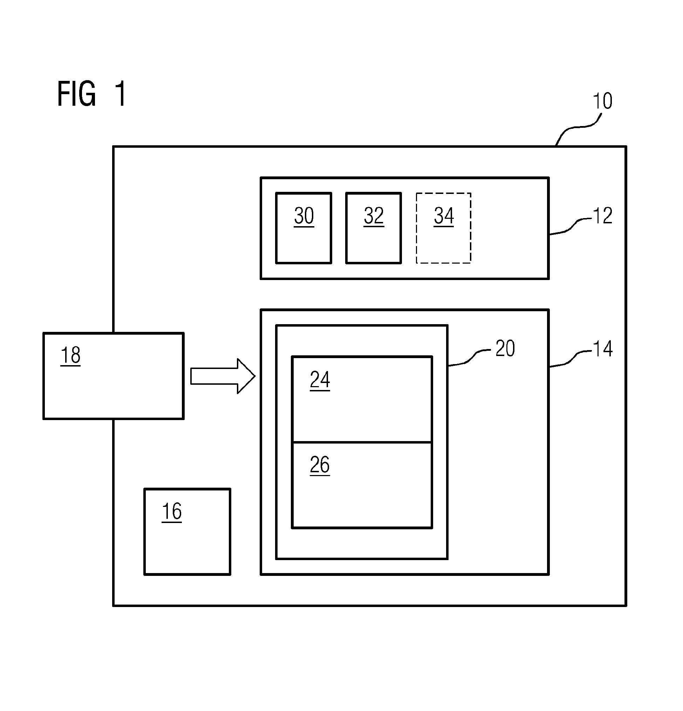

FIG 1 zeigt schematisch vereinfacht ein Automatisierungsgerät 10. Dieses umfasst in an sich bekannter Art und Weise einen Arbeitsspeicher 12, einen Firmwarespeicher 14 und eine im Folgenden nur kurz aber ohne Verzicht auf eine weitergehende Allgemeingültigkeit als Prozessor 16 bezeichnete Verarbeitungseinheit in Form von oder nach Art eines Mikroprozessors.

Beim Start des Automatisierungsgeräts 10 wird, zum Beispiel durch den Prozessor 16, von einem Speichermedium 18, zum Beispiel Diskette, Speicherkarte, Flash-Speicher, (E)EPROM, Wechselmedium (USB-Stick, etc.) usw., ein Urladeprogramm 20 in den Arbeitsspeicher 12 geladen und durch den Prozessor 16 ausgeführt.

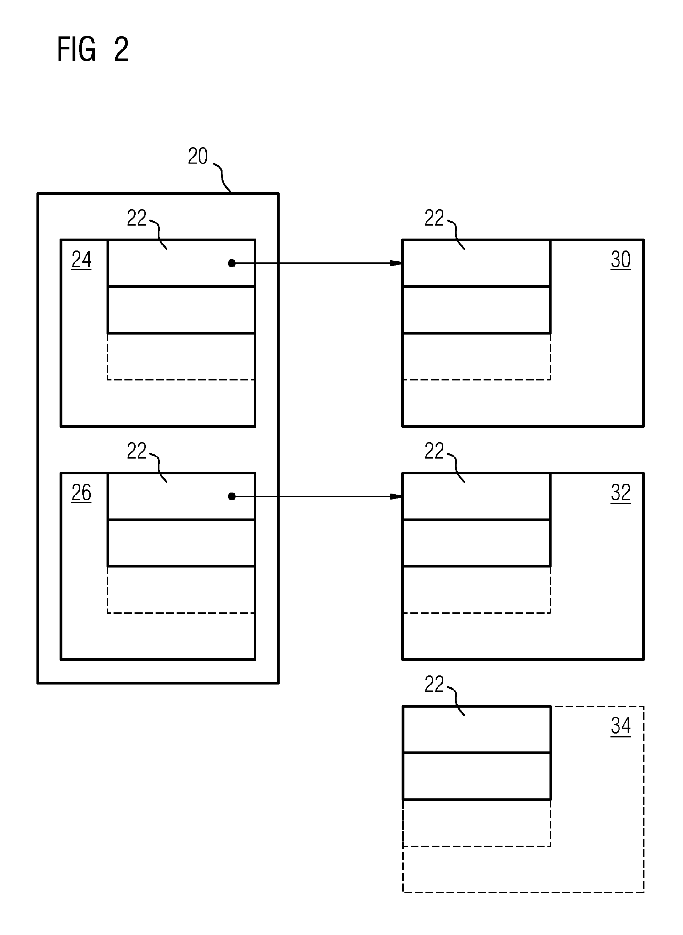

Das Urladeprogramm 20 zeichnet sich dadurch aus, dass es Programmcodeanweisungen 22 (FIG 2) zur Identifikation verschiedener Prozessoren 16 umfasst. Dies wird zum Beispiel dadurch realisiert, dass alle Programmcodeanweisungen 22 von einer Mehrzahl von Prozessoren 16 ausgeführt werden können, in dem Sinne, dass die Ausführung der jeweiligen Programmcodeanweisung 22 oder Programmcodeanweisungen 22 jedenfalls nicht zu einer Fehlersituation (Exception) führt, und das bestimmte Programmcodeanweisungen 22 bei zu deren Ausführung originär vorgesehenen Prozessoren 16 eine mit dem jeweiligen Maschinencode intendierte Aktion auslösen.

Das Urladeprogramm 20 umfasst also einen Abschnitt 24 mit zumindest einer Programmcodeanweisung 22 in einem Maschinencode für einen ersten Prozessortyp und in mindestens einem weiteren Abschnitt 26 zumindest eine Programmcodeanweisung 22 in einem Maschinencode für einen zweiten Prozessortyp. Die Ausführung der oder jeder Programmcodeanweisung 22 im ersten Abschnitt 24 durch einen Prozessor 16 des zweiten Prozessortyps bewirkt keine spezifische Aktion genauso wie die Ausführung der Programmcodeanweisung(en) 22 im zweiten Abschnitt 26 durch einen Prozessor 16 des ersten Prozessortyps, weil die dortigen Programmcodeanweisungen 22 jeweils nicht originär für einen Prozessor 16 des zweiten bzw. ersten Prozessortyps vorgesehen sind. Allerdings kann die oder jede Programmcodeanweisung 22 im ersten Abschnitt 24 bei Ausführung durch einen Prozessor 16 des ersten Prozessortyps die mit dem jeweiligen Maschinencode intendierte Aktion auslösen und es kommt entsprechend zu einer "normalen" Ausführung der oder jeder Programmcodeanweisung 22, weil die oder jede Programmcodeanweisung 22 in diesem ersten Abschnitt 24 originär für einen Prozessor 16 des ersten Prozessortyps vorgesehen ist. Entsprechendes gilt analog für die oder jede Programmcodeanweisung 22 im zweiten Abschnitt 26 und evtl. weiteren Abschnitten bei Ausführung durch einen Prozessor 16 des zweiten Prozessortyps oder evtl. weiterer Prozessortypen.

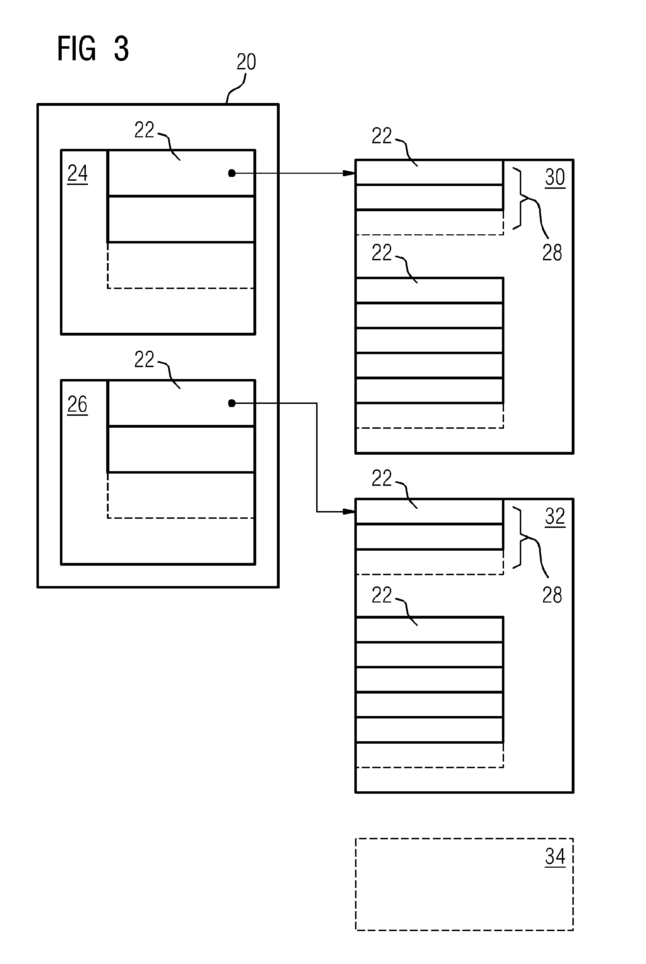

Wenn jetzt zum Beispiel nur der Maschinencode der Programmcodeanweisung(en) 22 in dem zweiten Abschnitt 26 durch den Prozessor 16 des jeweiligen Automatisierungsgeräts 10 ausführbar ist, beginnt dennoch die Ausführung des Urladeprogramms 20 mit dessen erster Programmcodeanweisung 22, also normalerweise der ersten Programmcodeanweisung 22 des ersten Abschnitts 24. Gemäß der soeben angenommenen Voraussetzung ist der Maschinencode dieser Programmcodeanweisung 22 für den Prozessor 16 nicht in einer sinnvollen Art und Weise ausführbar. Die Ausführung der Programmcodeanweisung 22 bewirkt allerdings keine Fehlersituation sondern nur, dass die Ausführung des Urladeprogramms 20 mit der jeweils nächstfolgenden Programmcodeanweisung 22 fortgesetzt wird. Mit anderen Worten wirkt die "Ausführung" einer an sich vom jeweiligen Prozessor 16 nicht ausführbaren Programmcodeanweisung 22 wie ein sogenannter NOP-Befehl (NOP = no operation). Auf diese Weise werden die Programmcodeanweisungen 22 des Urladeprogramms 20 sukzessive abgearbeitet. Irgendwann wird der zweite Abschnitt 26 mit dessen Programmcodeanweisung(en) 22 erreicht, die nach der oben angenommenen Voraussetzung durch den Prozessor 16 ausführbar sein sollen. Der zweite Abschnitt 26 umfasst zumindest eine Programmcodeanweisung 22 zum Aufruf einer Firmwaretransferfunktionalität 28 (FIG 3). Damit ist aus dem Firmwarespeicher 14 eine zum jeweiligen Prozessor 16 passende Firmware 30, 32, 34 ausgewählt und diese wird in den Arbeitsspeicher 12 transferiert.

FIG 2 zeigt dies mit weiteren Details. Dabei sind für das Urladeprogramm 20 und dessen Abschnitte 24, 26 jeweils Programmcodeanweisungen 22 durch ein rechteckiges Feld dargestellt. Um die Übersicht über die Darstellung nicht unnötig zu erschweren, sind allerdings nicht alle Programmcodeanweisungen 22 symbolisierenden Felder mit der entsprechenden Bezugsziffer bezeichnet. Gleiches gilt grundsätzlich für die Darstellung der Firmware 30, 32, 34 und der dortigen Programmcodeanweisungen 22. Aus der Anzahl der im Bereich der Abschnitte 24, 26 des Urladeprogramms graphisch dargestellten Programmcodeanweisungen 22 darf nicht auf deren tatsächliche Anzahl geschlossen werden. Tatsächlich ist grundsätzlich möglich, dass einzelne oder alle Abschnitte 24, 26 jeweils nur eine Programmcodeanweisung 22 umfassen.

Die Firmwaretransferfunktionalität 28 kann ganz oder teilweise vom Urladeprogramm 20 umfasst sein. Im einfachsten Fall kann die Firmwaretransferfunktionalität 28 auf Seiten des Urladeprogramms 20 in einem Aufruf, also einem Sprungbefehl oder dergleichen, bestehen, der die jeweilige, zum Prozessor 16 passende Firmware 30, 32, 34 adressiert. Dargestellt ist dies durch den von einer dann als Sprungbefehl gemäß der eingangs vorangestellten Definition fungierenden Programmcodeanweisung 22 ausgehenden Pfeil. Die Spitze des Pfeils stellt das Sprungziel des Sprungbefehls graphisch dar, indem diese auf die erste Programmcodeanweisung 22 der jeweiligen Firmware 30, 32, 34 zeigt.

Weil jeder Abschnitt 24, 26 des Urladeprogramms 20 prozessorspezifisch ist, kann jeder dortige Teil einer Firmwaretransferfunktionalität 28 direkt die jeweils zum Prozessor passende Firmware 30, 32, 34 adressieren. Gemäß der Darstellung in FIG 1 und FIG 2 könnte dies zum Beispiel bedeuten, dass der erste Abschnitt 24 des Urladeprogramms 20 eine Programmcodeanweisung 22 in einer Ausprägung als Sprungbefehl umfasst, die aus einer ersten, zweiten und dritten, im Firmwarespeicher 14 vorgehaltenen Firmware 30, 32, 34 die erste Firmware 30 adressiert. Entsprechend würde eine Programmcodeanweisung 22 im zweiten Abschnitt 26 des Urladeprogramms 20 die zweite Firmware 32 adressierten, usw.

Wenn das Urladeprogramm 20 jeweils nur eine solche Programmanweisung 22 umfasst, ist eine Funktionalität, die den eigentlichen Transfer der jeweils adressierten Firmware 30, 32, 34 in den Arbeitsspeicher 12 bewirkt, Teil der adressierten Firmware 30, 32, 34. Man könnte diesen Umstand auch so ausdrücken, dass die Firmware 30, 32, 34 im Firmwarespeicher 14 jeweils noch ein eigenes Firmwareladeprogramm umfasst und dass der zu transferierende Teil der jeweiligen Firmware 30, 32, 34 in der um das Firmwareladeprogramm verminderten Firmware 30, 32, 34 besteht. Ein solches Firmwareladeprogramm ist dann genau die Firmwaretransferfunktionalität 28.

Dies zeigt FIG 3 indem für jede Firmware 30, 32, 34 jeweils ein erster Block und ein zweiter Block mit Programmcodeanweisungen 22 dargestellt ist. Der erste Block mit Programmcodeanweisungen 22 ist das als Firmwaretransferfunktionalität 28 fungierende Firmwareladeprogramm. Auf dessen erste Programmcodeanweisung verzweigt ein Sprungbefehl oder dergleichen aus jeweils einem Abschnitt 24, 26 des Urladeprogramms. Dies bewirkt, dass bei einem ausführbaren Sprungbefehl nach einem damit bewirkten Sprung zu einer Adresse im Firmwarespeicher 14 jeweils unmittelbar die Firmwaretransferfunktionalität 28 ausgelöst und damit die jeweilige Firmware 30, 32, 34 in den Arbeitsspeicher kopiert wird. Inhaltlich besteht eine als Firmwareladeprogramm realisierte Firmwaretransferfunktionalität 28 im Wesentlichen darin, dass ausgehend von einer vorgegebenen Startadresse, nämlich der Startadresse der jeweiligen Firmware 30, 32, 34, bis zu einer zugehörigen Endadresse in einer Schleife jeweils ein Datum der Firmware 30, 32, 34 aus dem Firmwarespeicher 14 an eine vorgegebene Adresse in den Arbeitsspeicher 12 kopiert wird.

Ansonsten besteht die Möglichkeit, dass die Firmwaretransferfunktionalität 28 in jedem Abschnitt 24, 26 des Urladeprogramms in Form von durch den jeweiligen Prozessor 16 jeweils originär ausführbaren Programmcodeanweisungen 22 implementiert ist. Auch wenn eine solche Kopierfunktion Teil jeweils eines Abschnitts 24, 26 des Urladeprogramms 20 ist, ist grundsätzlich die gleiche Funktionalität wie oben skizziert implementiert, nämlich das Kopieren aller Daten zwischen einer vorgegebenen Start- und Endadresse.

Die Implementation der Firmwaretransferfunktionalität 28 als Teil der Firmware 30, 32, 34 im Firmwarespeicher 14 hat den Vorteil, dass das Urladeprogramm 20 keine Adressinformationen hinsichtlich der Umfänge der jeweiligen Firmware 30, 32, 34 benötigt. Selbst wenn sich also der Umfang einer Firmware 30, 32, 34 im Firmwarespeicher ändert, reicht es grundsätzlich aus, wenn weiterhin aus dem betreffenden Abschnitt 24, 26 des Urladeprogramms 20 zu der mit dem Sprungbefehl dort hinterlegten Startadresse der jeweiligen Firmware 30, 32, 34 im Firmwarespeicher 14 verzweigt wird. Allerdings bietet es sich dann an, dass jede Firmware 30, 32, 34 zum Beispiel am Start einer Segmentadresse abgelegt wird, damit gleichsam "hinter" der jeweiligen Firmware 30, 32, 34 im jeweiligen Speichersegment noch Platz bleibt, wenn spätere Implementationen der Firmware 30, 32, 34 zusätzlichen Speicherplatz benötigen.

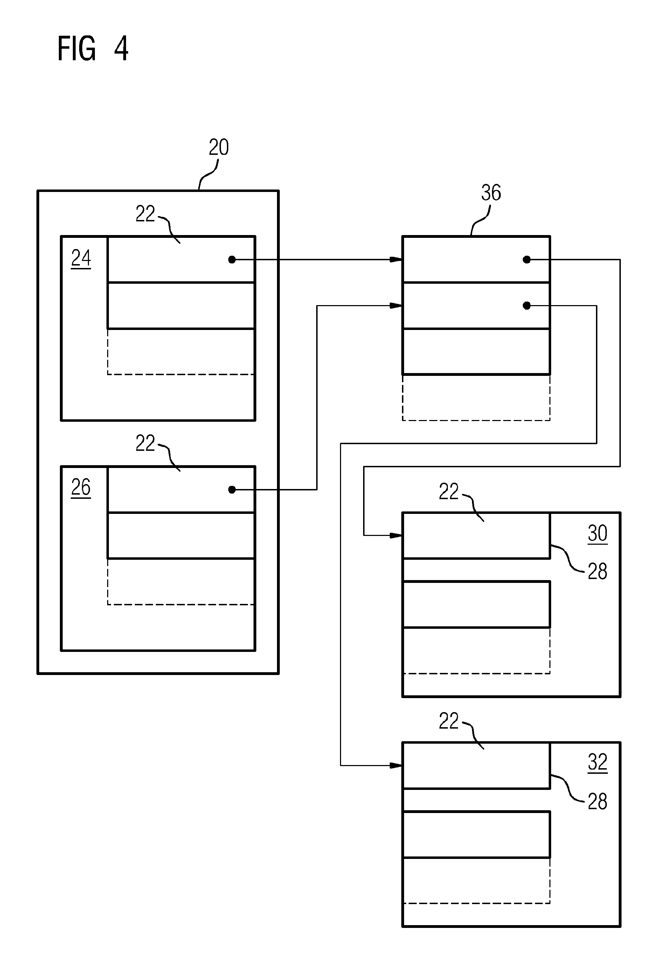

FIG 4 zeigt eine Situation, die in dieser Hinsicht zusätzliche Flexibilität ermöglicht. Danach umfasst der Firmwarespeicher 14 eine Sprungtabelle 36 und die von den Abschnitten 24, 26 des Urladeprogramms 20 umfassten Programmcodeanweisungen 22 zur Auswahl einer Firmware 30, 32, 34 beziehen sich zunächst auf jeweils einen Eintrag in dieser Sprungtabelle 36. In der Sprungtabelle 36 ist in jedem Eintrag die Startadresse einer Firmware 30, 32, 34 im Firmwarespeicher hinterlegt, so dass ausgehend von dem Sprung zunächst in einen Eintrag der Sprungtabelle 36 unmittelbar im Anschluss ein Sprung an die im entsprechenden Eintrag der Sprungtabelle 36 hinterlegte Startadresse, nämlich die Startadresse der jeweiligen Firmware 30, 32, 34 erfolgen kann. Der Vorteil dieser Lösung besteht darin, dass bei einer Änderung einer Firmware 30, 32, 34 und dadurch bedingter Änderungen der Speicherorte der oder jeder betroffenen Firmware 30, 32, 34 nur die Sprungtabelle 36 aktualisiert werden muss und die auf die Sprungtabelle 36 zeigenden Adressen in Urladeprogramm 20 unverändert bleiben können.

Einzelne im Vordergrund stehende Aspekte der hier eingereichten Beschreibung lassen sich damit kurz wie folgt zusammenfassen: Angegeben wird ein Verfahren zum Betrieb eines Automatisierungsgeräts 10 mit einem Arbeitsspeicher 12, einem Firmwarespeicher 14 und einen Prozessor 16, wobei in den Arbeitsspeicher 12 ein Urladeprogramm 20 geladen wird, wobei beim Start des Automatisierungsgeräts 10 durch den Prozessor 16 das Urladeprogramm 20 ausgeführt wird. Weil das Urladeprogramm 20 Programmcodeanweisungen zur Identifikation verschiedener Prozessoren 16 umfasst kann durch die Ausführung des Urladeprogramms 20 entsprechend dem jeweils identifizierten Prozessor 16 den Aufruf einer Firmwaretransferfunktionalität 28 bewirkt werden. Im Ergebnis transferiert die Firmwaretransferfunktionalität 28 aus dem Firmwarespeicher 14 eine zum identifizierten Prozessor 16 passende Firmware 30, 32, 34 in den Arbeitsspeicher 12 des Prozessors 16, der danach die so verfügbar gemachte Firmware 30, 32, 34 ausführen kann.

## Patentansprüche

1. Verfahren zum Betrieb eines Automatisierungsgeräts (10) mit einem Arbeitsspeicher (12), einem Firmwarespeicher (14) und einen Prozessor (16),
wobei in den Arbeitsspeicher (12) ein Urladeprogramm (20) geladen wird,
wobei beim Start des Automatisierungsgeräts (10) durch den Prozessor (16) das Urladeprogramm (20) ausgeführt wird,
**dadurch gekennzeichnet,**
**dass** das Urladeprogramm (20) Programmcodeanweisungen zur Identifikation verschiedener Prozessoren (16) umfasst,
**dass** die Ausführung des Urladeprogramms (20) entsprechend dem jeweils identifizierten Prozessor (16) den Aufruf einer Firmwaretransferfunktionalität (28) bewirkt und
**dass** die Firmwaretransferfunktionalität (28) aus dem Firmwarespeicher (14) eine zum identifizierten Prozessor (16) passende Firmware (30,32,34) in den Arbeitsspeicher (12) transferiert.

2. Verfahren nach Anspruch 1, wobei die Firmwaretransferfunktionalität (28) nach dem Transfer der ausgewählten Firmware (30-34) in den Arbeitsspeicher (12) die Ausführung der Firmware (30-34) durch den Prozessor (16) veranlasst.

3. Verfahren nach Anspruch 1 oder 2, wobei das Urladeprogramm (20) für unterschiedliche Prozessortypen jeweils einzelne Abschnitte (24,26) umfasst und wobei jeder Abschnitt (24,26) des Urladeprogramms (20) durch einen Prozessor (16) genau eines Prozessortyps ausführbar ist und jeder Abschnitt (24,26) zumindest eine Programmcodeanweisung (22) zum Aufruf jeweils einer zum jeweiligen Prozessortyp passenden Firmwaretransferfunktionalität (28) umfasst.

4. Verfahren nach Anspruch 3, wobei jeder Abschnitt (24,26) des Urladeprogramms (20) als Programmcodeanweisung (22) zum Aufruf einer jeweiligen Firmwaretransferfunktionalität (28) einen Sprungbefehl umfasst, der eine passende Firmware (30, 32,34) im Firmwarespeicher (14) direkt oder indirekt adressiert.

5. Verfahren nach Anspruch 4, wobei jeder Sprungbefehl in jeweils einem Abschnitt (24,26) des Urladeprogramms (20) jeweils einen Eintragung in einer im Firmwarespeicher (14) vorgehaltenen Sprungtabelle (36) adressiert und wobei jeder Eintrag in der Sprungtabelle (36) jeweils eine Firmware (30,32, 34) im Firmwarespeicher (14) direkt adressiert.

6. Computerprogramm mit Programmcode-Mitteln, um alle Schritte von jedem beliebigen der Ansprüche 1 bis 5 durchzuführen, wenn das Computerprogramm durch einen Prozessor (16) eines Automatisierungsgeräts (10) ausgeführt wird.

7. Digitales Speichermedium mit elektronisch auslesbaren Steuersignalen, die so mit einem Prozessor (16) eines Automatisierungsgeräts (10) zusammenwirken können, dass ein Verfahren nach einem der Ansprüche 1 bis 5 ausgeführt wird.

8. Automatisierungsgerät (10) mit einem Prozessor (16) und einem Arbeitsspeicher (12), in den als Computerprogramm nach Anspruch 6 ein Urladeprogramm (20) geladen ist, das beim Einschalten des Automatisierungsgeräts (10) durch den Prozessor (16) ausgeführt wird.
